# EUROPÄISCHE PATENTSCHRIFT

(11) **EP 0 814 322 B1**
(45) Veröffentlichungstag und Bekanntmachung des Hinweises auf die Patenterteilung: **17.12.2003**
(21) Anmeldenummer: 97109256.4
(22) Anmeldetag: 07.06.1997
(51) Int. Cl.: G01D 11/28, G01D 13/22, G12B 11/04

(54) **Anzeigeeinheit mit passivem Leuchtzeiger**
Display with having a passive luminous pointer
Unité d'affichage avec une aiguille lumineuse passive

(30) Priorität: 17.06.1996 DE 19624080
(43) Veröffentlichungstag der Anmeldung: 29.12.1997
(73) Patentinhaber: ROBERT BOSCH GMBH, 70442 Stuttgart (DE)
(72) Erfinder: Sybrichs, Ralf, 71254 Ditzingen (DE); Herzog, Bernhard Dr., 70619 Stuttgart (DE)

(56) Entgegenhaltungen:
- EP-A- 0 503 400
- DE-A- 4 121 248
- DE-A- 4 121 607
- GB-A- 2 024 426
- US-A- 4 218 726

## Beschreibung

### Stand der Technik

Die Erfindung geht aus von einer Anzeigeeinheit mit einem passiv beleuchteten Zeiger. Aus der US-PS 4 218 726 ist bereits eine Anzeigeeinheit mit einem passivem Leuchtzeiger aus lichtdurchlässigem Material, mit einer Skalenscheibe aus lichtdurchlässigem Material mit einer Durchgangsbohrung, durch die eine Welle hindurchgeht, bekannt. Am Umfang der Skalenscheibe ist eine Lichtquelle angeordnet, deren Licht vollständig innerhalb der Skalenscheibe in Richtung auf die Durchgangsbohrung übertragen wird und wobei der Leuchtzeiger aus einem Nabenteil, das auf der Welle befestigt ist und aus einem länglichen Zeigerteil besteht. Das Nabenteil des Leuchtzeigers weist eine in der Nähe der Durchgangsbohrung ausgebildete erste lichtreflektierende Fläche auf, welche das aus axialer Richtung in den Nabenteil eingestahlte Licht in Richtung auf den Vorderteil des Nabenteils umlenkt. Am Vorderteil des Nabenteils ist eine zweite lichtreflektierende Fläche zum Reflektieren des von der ersten lichtreflektierenden Fläche eingestrahlten Lichtes in den Zeigerteil vorgesehen. Die zweite reflektierende Fläche ist dabei so gekrümmt, daß mindestens ein Brennpunkt für die von der zweiten Fläche reflektierten Lichtstrahlen innerhalb eines bestimmten Bereiches des Zeigers gebildet ist und damit alle den mindestens einen Brennpunkt erreichenden Lichtstrahlen zur Ausleuchtung des Zeigers beitragen.

Aus der GB 2 024 426 ist ein beleuchtetes Anzeigeinstrument bekannt, bei dem das Licht einer Lichtquelle in eine lichtleitende Zifferblattplatte einkoppelbar ist, von der es in Richtung eines Zeigers auskoppelbar ist. Der Zeiger weist einen gebogenen Bereich auf, mittels dem das Licht von der Zifferblattplatte in Richtung einer Zeigerfahne umlenkbar ist.

Aus der DE 33 47 014 C2 ist eine Zeigereinrichtung bekannt, bei welcher ein um eine Zeigerachse drehbar gelagerter Zeiger ebenfalls aus transparentem lichtleitendem Material besteht. Auf der dem Betrachter abgewandten Seite des Zeigers ist fest eine Lichtquelle montiert, deren Licht axial zur Zeigerachse in das lichtleitende Material des Leuchtzeigers eingekoppelt wird. Das axial eingekoppelte Licht ist über einen Lichtleiteinsatz in die radiale Längserstreckungsrichtung des Zeigers umlenkbar.

### Vorteile der Erfindung

Die erfindungsgemäße Anordnung mit den Merkmalen des Hauptanspruchs hat den Vorteil, daß ein Leuchtzeiger, der sowohl im radialen als auch im axialen Bereich eine geringe Dicke aufweist, im Bezug auf Materialkosten preiswert ist und weiterhin wenig Reibung am Meßwerk verursacht. Die Einkopplung des Lichtes von der Lichtquelle direkt in den axialen Abschnitt des Zeigers hat den Vorteil, daß keine zusätzlichen Anordnungen zur Reflexion des Lichtes einer Lichtquelle in den Zeiger vorzusehen sind. Die Lichtquellen beispielsweise in Form von Leuchtdioden können direkt gegenüber der Stirnfläche des axialen Abschnittes angebracht werden. Die Ausbildung eines bogenförmigen Abschnittes des Leuchtzeigers am Übergang vom axialen zum radialen Bereich mit einem Außenradius der in seinen Abmessungen größer ist als die Dicke des lichtleitenden Materials im Bereich der Lichteinkopplung in die Zeigerfahne hat den Vorteil, daß das Licht im Zeigerinneren über Mehrfachreflexionen mit flachen Winkel an der Lichtleiterwand in die Zeigerfahne umgelenkt wird. Durch den flachen Reflexionswinkel wird das Licht nahezu 100%ig an der Lichtleitwand reflektiert, wodurch praktisch keine Lichtverluste auftreten und die Zeigerfahne so sehr gut ausleuchtbar ist. Damit können zusätzliche reflektierende Flächen entfallen, da die physikalischen Eigenschaften der Lichtweiterleitung hier voll zum Tragen kommen. Gleichzeitig ist eine solche Anordnung sehr einfach herzustellen.

Durch die in den Unteransprüchen aufgeführten Maßnahmen sind vorteilhafte Weiterbildungen und Verbesserungen der im Hauptanspruch angegebenen Anzeigeeinheit mit passiven Leuchtzeiger möglich. Besonders vorteilhaft ist es beispielsweise, den bogenförmigen Abschnitt aus einer Vielzahl ebener Abschnitte zusammenzusetzen, deren Hüllkurve näherungsweise einer Spähre entspricht. Damit können ganz gezielt bestimmte Winkel ausgewählt werden, um eine möglichst gleichmäßige Verteilung des Lichtes im Leuchtzeiger zu gewährleisten.

### Zeichnung

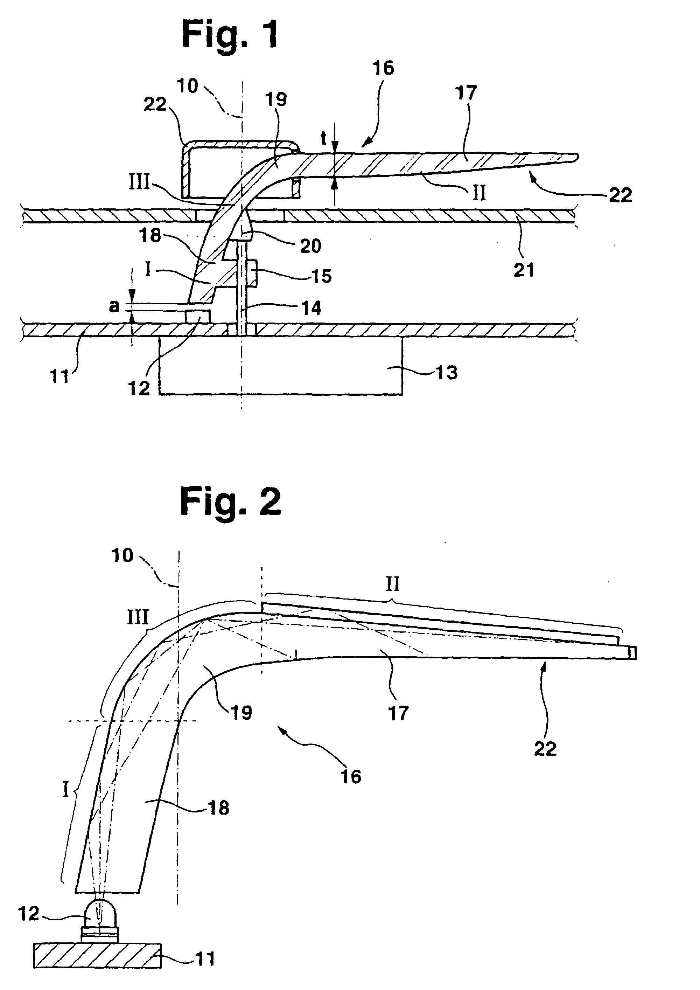

Ausführungsbeispiele der Erfindung sind in der Zeichnung dargestellt und in der nachfolgenden Beschreibung näher erläutert. Es zeigen Figur 1 schematisch eine Anzeigeeinheit mit bogenförmigen Leuchtzeiger und Figur 2 den bogenförmigen Leuchtzeiger mit Lichtquelle.

### Beschreibung der Ausführungsbeispiele

Figur 1 zeigt schematisch eine Zeigeranordnung mit einem passiven Leuchtzeiger. Hierbei ist im Gegensatz zu aktiven Leuchtzeigern, die Lichtquelle nicht im Zeiger selbst integriert, sondern das Licht wird von mindestens einer fest montierten Lichtquelle, die sich nicht mit dem Zeiger dreht, in den drehbar gelagerten Leuchtzeiger eingekoppelt. In Figur 1 sind auf einer Leiterplatte 11 mehrere Leuchtdioden 12 montiert, vorzugsweise sind diese Leuchtdioden etwa mit einem Abstand von 60° montiert. In der Figur 1 selbst ist beispielhaft nur eine Leuchtdiode 12 dargestellt, die auf der Leiterplatte 11 montiert und entsprechend kontaktiert ist. Auf der dem Betrachter abgewandten Rückseite der Leiterplatte 11 befindet sich ein Meßwerk 13, welches eine Zeigerwelle 14 antreibt, die durch eine Öffnung in der Leiterplatte 11 hindurchgeführt ist. Auf der Zeigerwelle 14 ist der Leuchtzeiger 16 mit seiner Zeigernabe 15 befestigt. Diese Zeigernabe 15 und der Leuchtzeiger 16 sind einteilig aus einem Lichtleiter geformt.

Der konstruktive Aufbau des Leuchtzeigers 16 wird in Figur 2 in vergrößerter Darstellung mit einer ihm zugeordneten Leuchtdiode 12 gezeigt und soll unter Zuhilfenahme der Figur 2 erläutert werden.

Der Leuchtzeiger 16 kann, wie in Figur 2 dargestellt, in drei Abschnitte, die durch gestrichelte Linien gekennzeichnet sind, unterteilt werden. Das sind ein axialer Abschnitt I, der etwa in Richtung der Zeigerwelle und damit der Symmetrieachse 10 verläuftt, ein radialer Abschnitt II, welcher die Zeigerfahne 17 bildet, und ein bogenförmiger Abschnitt III, der den Übergang vom axiale Abschnitt I zum radialen Abschnitt II bildet. Der axiale Abschnitt I ist mit seiner vom Betrachter abgewandten Stirnseite der Leuchtdiode 12 zugeordnet, so daß das Licht der Leuchtdiode 12 hier in den Lichtleiter eingekoppelt wird. Aufgrund dieser lichtholenden Funktion bezeichnet man diesen Abschnitt I auch als Lichtholer 18. Der radiale Abschnitt II bildet eine Zeigerfahne 17, wobei auf der dem Betrachter zugewandten Oberseite der Zeigerfahne 17 ein diffus relektierende Schicht 22 aufgebracht ist, die eine für den Betrachter gut sichtbare Beleuchtung der gesamten Zeigerfahne 17 gewährleistet. Die Umlenkung vom axialen Abschnitt I und damit vom Lichtholer 18 zum radialen Abschnitt II, der Zeigerfahne 17 erfolgt über den bogenförmigen Abschnitt III, der auch als Lichtumlenker 19 bezeichnet werden kann. Der bogenförmige Abschnitt III sollte hierbei einen Außenradius aufweisen, der größer als die Dicke t des lichtleitenden Materials im Bereich der Lichteinkopplung in die Zeigerfahne 17 ist.

An den Lichtleiter 16 ist ebenfalls aus dem lichtleitenden Material eine Zeigernabe 15 angeformt, mit der der Lichtleiter 16 auf die Zeigerwelle 14 aufgesteckt werden kann, so daß sich der Zeiger mit dieser Zeigerwelle 14 dreht. Desweiteren ist an den Leuchtzeiger 16 noch ein axialer Anschlag 20 angeformt, so daß der Leuchtzeiger 16 auf der Zeigerwelle 14 fixiert ist. Der Lichtholer 18 mit angeformter Zeigernabe 15 und Anschlag 20 befindet sich auf der dem Betrachter abgewandten Seite eines Ziffernblattes 21. Der Leuchtzeiger 16 selbst ist durch eine Öffnung in dem Ziffernblatt 21 geführt und der bogenförmige Abschnitt III wird von einer lichtundurchlässigen Kappe 22 verdeckt. Der Abstand zwischen der Leuchtdiode 12 und der dem Betrachter abgewandten Stirnfläche des Lichtholers 18 ist in der Figur 1 mit a bezeichnet. Dieser Abstand a sollte möglichst klein gewählt werden, damit möglichst das gesamte Licht der Leuchtdiode 12 in den Lichtholer 18 eingekoppelt werden kann und möglichst keine Verluste an die Umgebung auftreten. Der Anschlag 20 bietet ermöglicht es, den Abstand a sehr genau festlegen zu können.

Der bogenförmige Abschnitt III realisiert die Lichtumlenkung von der axialen Richtung in die radiale Richtung. Figur 2 zeigt, daß der axiale Abschnitt I des Lichtholers 18 gegenüber der Richtung der Zeigerwelle 14 und damit der Symmetrieachse 10 ausgehend von seiner dem Betrachter abgewandten Stirnseit nicht parallel zur Symmetrieachse verläuft, sondern etwas in Richtung Symmetrieachse geneigt ist. Diese Gestaltung hat den Vorteil, daß der Durchbruch im Ziffernblatt 21 kleiner ausgelegt sein kann und damit auch eine kleinere lichtundurchlässige Kappe 22 verwendet werden kann.

Letztendlich hat diese Neigung des axialen Abschnittes I gegen die Symmetrieachse den Vorteil, daß die eingekoppelten Lichtstrahlen, die in Figur 2 schematisch angegeben sind, in einem sehr flachen Winkel auf die Außenwand des Lichtleiters im bogenförmigen Abschnitt III auftreffen. Die Ausbildung des bogenförmigen Abschnittes III mit einem Außenwinkel, der größer ist, als die Dicke t des Lichtleiters am Übergang in den radialen Abschnitt II gewährleistet, für alle Lichtstrahlen einen flachen Einfalls- und damit sehr guten Reflektionswinkel, wodurch eine nahezu 100%ige Lichtausbeute für die Beleuchtung der Zeigerfahne 17 ermöglicht ist. Des weiteren kann ein schmaler Lichtleiter verwendet werden, was sich sehr kostengünstig auswirkt.

Eine andere Gestaltungsmöglichkeit des Lichtumlenkers 19 ist das Anbringen einer Vielzahl von eindimensional gekrümmten Abschnitten, die eine toroidförmige oder toroidähnliche Fläche darstellen, wobei die toroidähnliche Fläche eine sphärische Fläche oder auch eine Zylinderfläche sein kann.

## Patentansprüche

1. Anzeigeeinheit mit einem passiven, aus lichtleitendem Material bestehenden Leuchtzeiger (16), welcher auf einer drehbar gelagerten Zeigerwelle (14) befestigt ist, wobei der Leuchtzeiger (16) aus einem radialen Abschnitt (II), welcher eine Zeigerfahne (17) bildet, und einem axialen Abschnitt (I), welcher einen Lichtholer (18) bildet, besteht, mit mindestens einer festmontierten Lichtquelle (12), deren Licht in den Leuchtzeiger (16) eingekoppelt wird, wobei die Umlenkung des Lichts von dem axialen Abschnitt des Lichtholers (18) zu dem radialen Abschnitt der Zeigerfahne ( 17) über einen bogenförmigen Abschnitt (19) erfolgt, und wobei der bogenförmige Abschnitt (19) einen Außenradius aufweist, der größer als die Dicke t des lichtleitenden Materials im Bereich der Lichteinkopplung in die Zeigerfahne (17) ist, wobei die Anzeigeeinheit ein Zifferblatt (21) aufweist, **dadurch gekennzeichnet, dass** der Leuchtzeiger (16) durch eine Öffnung in dem Zifferblatt (21) führt, dass auf einer auf der dem Betrachter abgewandten Seite des Zifferblatts (21) die mindestens eine Lichtquelle (12) an einer Leiterplatte (11) montiert ist und dass der Lichtholer (18) auf der dem Betrachter der Anzeigeeinheit abgewandten Seite des Zifferblattes (21) derart zu der mindestens einen festmontierten Lichtquelle (12) geführt ist, dass das Licht aus der mindestens einen festmontierten Lichtquelle (12) direkt in den Lichtholer (18) einkoppelt.

2. Anzeigeeinheit nach Anspruch 1, **dadurch gekennzeichnet, dass** der bogenförmige Abschnitt (19) eine toroidähnliche Außenfläche aufweist.

3. Anzeigeeinheit nach Anspruch 2, **dadurch gekennzeichnet, dass** die toroidähnliche Fläche eine sphärische Fläche ist.

4. Anzeigeeinheit nach Anspruch 2, **dadurch gekennzeichnet, dass** die toroidähnliche Fläche eine Zylinderfläche ist.

5. Anzeigeeinheit nach einem der vorhergehenden Ansprüche, **dadurch gekennzeichnet, dass** aus dem Lichtleiter(16), welcher den Zeiger bildet, gleichzeitig einstückig eine Zeigernabe (15) und ein axialer Anschlag (20) herausgearbeitet ist.

6. Anzeigeeinheit nach einem der vorhergehenden Ansprüche, **dadurch gekennzeichnet, dass** ein Abstand (a) zwischen einer Leuchtdiode (12) und dem Lichtholer (18) derart gewählt ist, dass das gesamte Licht der Leuchtdiode (12) in den Lichtholer (18) einkoppelbar ist.

## Claims

1. Display unit having a passive luminous pointer (16) which consists of optically conducting material and is fastened on a rotatably mounted pointer shaft (14), the luminous pointer (16) comprising a radial section (II), which forms a pointer vane (17), and an axial section (I), which forms a light fetcher (18), having at least one permanently mounted light source (12) whose light is branched into the luminous pointer (16), the deflection of the light from the axial section of the light fetcher (18) to the radial section of the pointer vane (17) being performed via an arcuate section (19), and the arcuate section (19) having an outer radius which is greater than the thickness t of the optically conducting material in the region of the launching of the light into the pointer vane (17), the display unit having a dial (21), **characterized in that** the luminous pointer (16) leads through an opening in the dial (21), **in that** the at least one light source (12) is mounted on a printed circuit board (11) on a side of the dial (21) averted from the viewer, and **in that** on the side of the dial (21) averted from the viewer of the display unit the light fetcher (18) is guided in such a way to the at least one permanently mounted light source (12) that the light is launched from the at least one permanently mounted light source (12) directly into the light fetcher (18).

2. Display unit according to Claim 1, **characterized in that** the arcuate section (19) has a quasi-toroidal outer surface.

3. Display unit according to Claim 2, **characterized in that** the quasi-toroidal surface is a spherical surface.

4. Display unit according to Claim 2, **characterized in that** the quasi-toroidal surface is a cylindrical surface.

5. Display unit according to one of the preceding claims, **characterized in that** a pointer hub (15) and an axial stop (20) are simultaneously machined in one piece from the optical conductor (16) which forms the pointer.

6. Display device according to one of the preceding claims, **characterized in that** a spacing (a) between a light-emitting diode (12) and the light fetcher (18) is selected in such a way that the entire light of the light-emitting diode (12) can be launched into the light fetcher (18).

## Revendications

1. Unité d'affichage avec une aiguille lumineuse passive (16) en matériau conducteur de lumière, fixée sur un chevillot (14) logé de manière rotative, cette aiguille lumineuse (16) étant constituée d'une section radiale (II) formant un bras d'aiguille (17), et d'une section axiale (I) formant un absorbeur de lumière (18), avec au moins une source lumineuse (12) montée de manière fixe, dont la lumière est modulée dans l'aiguille lumineuse (16), la déviation de lumière étant réalisée à l'aide d'une section en forme d'arc (19) depuis la section axiale de l'absorbeur de lumière ( 18) vers la section radiale du bras d'aiguille (17), et la section en forme d'arc ( 19) présentant un rayon extérieur supérieur à l'épaisseur t du matériau conducteur de lumière dans la partie où se module la lumière dans le bras d'aiguille (17), l'unité d'affichage présentant un cadran (21),
**caractérisée en ce que**
- l'aiguille lumineuse (16) mène au cadran (21) par une ouverture, et au moins l'une des sources lumineuses (12) est montée sur une carte de circuits imprimés (11) sur un côté du cadran (21) non visible par l'observateur, et
- l'absorbeur de lumière (18) est guidé sur le côté du cadran (21) (non visible par l'observateur) de l'unité d'affichage vers au moins une source lumineuse (12) montée de manière fixe de telle sorte que la lumière d'au moins une source lumineuse (12) montée de manière fixe est modulée directement dans l'absorbeur de lumière (18).

2. Unité d'affichage selon la revendication 1,
**caractérisée en ce que**
la section en forme d'arc (19) présente une surface extérieure de type toroïdal.

3. Unité d'affichage selon la revendication 2,
**caractérisée en ce que**
la surface de type toroïdal est une surface sphérique.

4. Unité d'affichage selon la revendication 2,
**caractérisée en ce que**
la surface de type toroïdal est une surface cylindrique.

5. Unité d'affichage selon l'une quelconque des revendications précédentes,
**caractérisée en ce qu'**
un moyeu de l'aiguille (15) et une butée axiale (20) sont ébauchés simultanément d'un seul tenant à partir du conducteur de lumière (16) formant l'aiguille.

6. Unité d'affichage selon l'une quelconque des revendications précédentes,
**caractérisée en ce qu'**
une distance (a) entre une diode lumineuse (12) et l'absorbeur de lumière (18) est sélectionnée de telle sorte que la totalité de la lumière de la diode lumineuse (12) est modulable dans l'absorbeur de lumière (18).
